Europäisches Patentamt

European Patent Office

Office européen des brevets

(19)

(11) Veröffentlichungsnummer: **0 305 838**
**B1**

(12) **EUROPÄISCHE PATENTSCHRIFT**

(45) Veröffentlichungstag der Patentschrift: **02.01.91**

(21) Anmeldenummer: **88113596.6**

(22) Anmeldetag: **22.08.88**

(51) Int. Cl.⁵: **B 29 C 33/64,** C 08 L 83/04

(54) **Verwendung von Glycidoxypropylsilanol und Polydimethylsiloxanen und diese enthaltende wässrige Formentrennmittel.**

(30) Priorität: **31.08.87 DE 3729039**

(43) Veröffentlichungstag der Anmeldung:
**08.03.89 Patentblatt 89/10**

(45) Bekanntmachung des Hinweises auf die
Patenterteilung:
**02.01.91 Patentblatt 91/01**

(84) Benannte Vertragsstaaten:
**AT BE CH DE ES FR GB IT LI NL SE**

(56) Entgegenhaltungen:
**EP-A-0 202 494**
**DE-A-1 913 684**
**US-A-3 872 038**

Die Akte enthält technische Angaben, die nach
dem Eingang der Anmeldung eingereicht
wurden und die nicht in dieser Patentschrift
enthalten sind.

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Seltmann, Hans-Günther, Dr.**
**Oranienburger Strasse 100**
**D-4000 Düsseldorf 13 (DE)**
Erfinder: **Härer, Jürgen, Dr.**
**Johannes-Hesse-Strasse 3**
**D-4000 Düsseldorf 13 (DE)**
Erfinder: **Hoffmann, Hans-Josef**
**Brunnenstrasse 60**
**D-4000 Düsseldorf 1 (DE)**

Courier Press, Leamington Spa, England.

**Beschreibung**

Die Erfindung betrifft die Verwendung einer wässrigen Lösung bzw. Suspension, enthaltend Glycidoxypropylsilanol und ein Zahlenmittel der Molmassen von mehr als 100.000 aufweisende Polydimethylsiloxane als Formentrennmittel für Kunststoffe.

Es sind eine Reihe von verschiedenen Formentrennmitteln bekannt und im Handel erhältlich, die folgende Stoffe enthalten:

1. in Wasser lösliche Tenside;
2. Siliconöle, die organische Lösemittel enthalten;
3. organische Lösemittel enthaltende, vernetzbare Siliconharze und
4. Siliconlatices.

Die vorgenannten Formentrennmittel weisen neben einigen Vorteilen auch erhebliche Nachteile auf. So sind die Formentrennmittel der Gruppe 1 zwar biologisch gut abbaubar und ergeben eine gute Trennwirkung, werden jedoch bei jedem Trennzyklus von der Form abgeschoben. Die Formentrennmittel der Gruppe 2 müssen zur Ausbildung eines dünnen Films auf der Form in organischen Lösemitteln gelöst werden. Da diese Lösemittel entzündlich sind und die Formentrennmittel auf ca. 160°C heiße Formen aufgebracht werden, muß in explosionsgeschützten Anlagen gearbeitet werden. Verwendet man andererseits nicht brennbare halogenierte Kohlenwasserstoffe als Lösemittel, müssen wegen der sich bildenden Lösemitteldämpfe die üblichen Entsorgungsmaßnahmen getroffen werden. Auch Formentrennmitteln der Gruppe 2 müssen nach jedem Zyklus neu aufgetragen werden. Hinzu kommt, daß sie auf den Oberflächen des Formgegenstandes zurückbleiben, sodaß diese vor dem Lackieren erst gesäubert werden müssen.

Die Formentrennmittel der Gruppe 3 weisen infolge ihres Gehaltes an Lösemitteln die bereits diskutierten Nachteile auf, wenngleich sie über mehrere Formzyklen beständig bleiben. Die Formentrennmittel der Gruppe 4 sind zwar frei von organischen Lösemitteln, sind jedoch wenig abschiebestabil, so daß sie häufig neu aufgetragen werden müssen und zudem in der Praxis zu Formverschmutzungen führen. Es besteht daher ein Bedürnis an Formentrennmitteln, die frei von organischen Lösemitteln sind und über eine Vielzahl von Formzyklen nicht erneuert werden müssen.

Diese Aufgabe wird durch die erfindungsgemäße Verwendung einer wässrigen Lösung bzw. Suspension, enthaltend Glycidoxypropylsilanol und Polydimethylsiloxane mit den eingangs genannten Merkmalen, gelöst. Die erfindungsgemäß zu verwendenden Lösungen bzw. Suspensionen enthalten, abgesehen von Spuren von bei der Hydrolyse gebildetem Alkohol ausschließlich Wasser als Lösemittel, bilden in der Form einen abschiebestabilen, gut trennenden Film, welcher eine Reihe von Vulkanisationszyklen übersteht, und bleiben nicht an der Oberfläche der Formgegenstände haften, so daß eine Reinigung vor der Lackierung oder Verklebung nicht erforderlich ist.

Die Erfindung betrifft weiterhin ein Formentrennmittel, enthaltend 0,5 bis 3 Gew.-% Glycidoxypropylsilanol und 0,2 bis 2 Gew.-% eines Siliconlatex, wobei der Siliconlatex etwa 25 bis 55 Gew.-% eines Polydimethylsiloxans mit einem Zahlenmittel der Molmassen von mehr als 100.000 in wässriger Emulsion enthält, in wässriger Lösung bzw. Suspension.

Das erfindungsgemäß einzusetzende Glycidoxypropylsilanol ist eine bekannte Verbindung, die sich durch Hydrolyse von handelsüblichem 3-Glycidoxypropyl-trimethoxy- oder -ethoxysilan mit verdünnten Säuren, vorzugsweise Essigsäure, bei pH-Werten von 4 bis 4, 5 erhalten läßt. Das Hydrolyseprodukt kann neben dem Glycidoxypropylsilanol noch weitere Hydrolyseprodukte (durch Ringöffnung der Epoxigruppe) und Kondensationsprodukte (durch Reaktionen an der Silanolgruppe) enthalten. Siliconlatices mit den Merkmalen gemäß der Erfindung sind handelsüblichen Verbindungen.

Die Erfindung wird im folgenden anhand von bevorzugten Ausführungsbeispielen und Vergleichsbeispielen näher erläutert.

**Beispiel 1**

a) Herstellung von Glycidoxypropylsilanol.

In einem Dreihalskolben mit Rührer, Tropftrichter und Rückflußkühler wurden 500 g Wasser mit verdünnter Essigsäure auf einen pH-Wert von 4 bis 4,5 eingestellt. Anschließend wurden 15 g Glycidoxypropyl-triethoxysilan zugetropft; dabei wurde auf 90°C erwärmt. Diese Temperatur wurde 1 Stunde beibehalten.

b) Herstellung des Trennmittels.

Die nach Stufe a) erhaltene abgekühlte Silanollösung wurde mit einem handelsüblichen Polydimethylsiloxan-Latex unter Rühren vermischt, der folgende Eigenschaften aufwies:
anionisch stabilisierte Emulsion,
Zahlenmittel der Polydimethylsiloxan-Molmasse über 100.000
Gehalt an nicht flüchtigen Bestandteilen 40 Gew.-%,
spezifisches Gewicht 1,02
pH-Wert 11,2
Viskosität 1000 mPa · s (cps).
Das Produkt als im Handel erhältlich.

# EP 0 305 838 B1

Beispiel 2

Analog zu der Verfahrensweise des Beispiels 1 wurde ein Formentrennmittel mit einem Gehalt an 3 Gew.-% Glycidoxypropylsilanol und 1 Gew.-% Siliconlatex hergestellt.

Beispiel 3

Analog zu der Verfahrensweise des Beispiels 1 wurde ein Formentrennmittel mit einem Gehalt an 1,3 Gew.-% Glycidoxypropylsilanol und 0,22 Gew.-% Siliconlatex hergestellt.

Als Testform wurde eine Konstruktion verwendet, die eine obere Rundplatte mit einem Durchmesser von 85 mm, versehen mit 16 Sechskantschrauben M12, eine untere Rundplatte, welche mit Rillen versehen war, in die sich der Kautschuk preßte, und einen zwischen den Rundplatten befindlichen Kautschukrohling umfaßte. Es wurde eine Kautschukmischung der folgenden Zusammensetzung verwendet:

| SBR | 100 Gew.-Teile |
| Stearinsäure | 1 Gew.-Teil |
| ZnO | 10 Gew.-Teile |
| Alterungsschutzmittel | 1 Gew.-Teil |
| Paraffin (42—44°C) | 1 Gew.-Teil |
| HAF-Ruß | 70 Gew.-Teile |
| Beschleuniger | 1 Gew.-Teil |
| Schwefel | 0,8 Gew.-Teile |

Die Vulkanisationsbedingungen waren wie folgt:

| Vulkanisationstemperatur: | 170°C |
| Vulkanisationszeit: | 7 Minuten |
| Druck: | 150 bar. |

Zur Durchführung der Trennprüfungen wurde das Trennmittel auf die obengenannte Form ausgesprüht und 30 min bei 150°C eingebrannt. Anschließend erfolgte die Verpressung.

Die oberen und unteren Rundplatten wurden in einer Zerreißmaschine senkrecht getrennt. Die maximalen Trennwerte wurden aufgezeichnet. Anschließend erfolgten weitere Verpressungen und Trennungen ohne erneutes Auftragen von Trennmitteln.

Die mit den Trennmitteln gemäß den Beispielen 1 bis 3 erhaltenen Ergebnisse sind in der am Schluß der Beschreibung befindlichen Tabelle zusammengefaßt.

Unter den obengenannten Bedingungen wurden weiterhin Vergleichsversuche Nr. I bis VIII durchgeführt, wobei im einzelnen die folgenden Zusammensetzungen geprüft wurden:

I: ohne Trennmittel
II: lösemittelhaltiges Siliconharz (handelsüblich)
III: 1%-iges Tensid (Alkansulfonat) in Wasser (handelsüblich)
IV: 1% Siliconlatex gemäß Beispiel 1
V: Glycidoxypropylsilanol gemäß Beispiel 1 (3 Gew.-% Glycidoxypropyltriethyoxysilan auf Wasser)
VI: 3% hydrolysiertes Aminoethyl-aminopropyl-triethoxysilan (handelsüblich)
VII: 5%-iges gamma-Aminopropyl-triethoxysilan
VIII: 3%-iges hydrolysiertes Vinyltriethoxysilan.

Gemische des Siliconlatex gemäß Beispiel 1 mit den hydrolysierten Silanen gemäß dem Vergleichsbeispielen VI, VII und VIII waren nicht stabil und ergaben daher keine brauchbaren Formentrennmittel.

Die Ergebnisse der Vergleichsversuche sind ebenfalls in der am Schluß der Beschreibung befindlichen Tabelle zusammengefaßt.

Aus der Tabelle ergibt sich, daß die Formentrennmittel gemäß den Beispielen 1 bis 3 der Erfindung eine ausgezeichnete Trennwirkung auch im zehnten Formzyklus ergeben. Gegenüber den Einzelkomponenten (Vergleichsversuche Nr. IV und V) ergeben sich für die erfindungsgemäßen Kombinationen synergistische Wirkungen. Schließlich weisen die Trennmittel der Erfindung gegenüber dem Vergleichsbeispiel II den Vorteil der Lösemittelfreiheit auf.

3

# EP 0 305 838 B1

## TABELLE
### (Trennwerte in N)

| Beispiel | 1. Trennwert | 2. Trennwert | 5. Trennwert | 10. Trennwert |
|---|---|---|---|---|
| 1 | 7 | 6 | 7 | 7 |
| 2 | 12 | 15 | 17 | 20 |
| 3 | 7 | 7 | 8 | 8 |
| Vergleichsbeispiel | | | | |
| I | 45 | 45 | 45 | 45 |
| II | 9 | 9 | 8,5 | 9 |
| III | 8 | 12 | 20 | 40 |
| IV | 8 | 11 | 15 | 25 |
| V | 40 | 35 | 17 | 15 |
| VI | 16 | 20 | 35 | 45 |
| VII | 45 | 45 | 45 | 45 |
| VIII | 45 | 45 | 45 | 45 |

## Patentansprüche

1. Verwendung einer wässrigen Lösung bzw. Suspension, enthaltend Glycidoxypropylsilanol und ein Zahlenmittel der Molmassen von mehr als 100.000 aufweisende Polydimethylsiloxane, als Formentrennmittel für Kunststoffe.

2. Formentrennmittel, enthaltend 0,5 bis 3 Gew.-% Glycidoxypropylsilanol und 0,2 bis 2 Gew.-% eines Siliconlatex, wobei der Siliconlatex 25 bis 55 Gew.-% eines Polydimethylsiloxans mit einem Zahlenmittel der Molmassen von mehr als 100.000 in wässriger Emulsion enthält, in wässriger Lösung bzw. Suspension.

## Revendications

1. Utilisation d'une solution aqueuse ou d'une suspension contenant du glycidoxypropylsilanol et un polydiméthylsiloxane présentant une masse polaire en nombre supérieur à 100 000, comme agent de démoulage de matières plastiques.

2. Agent de démoulage contenant 0,5 à 3% en poids de glycidoxypropylsilanol et 0,2 à 2% en poids d'un latex de silicone, le latex de silicone comprenant 25 à 55% en poids d'un polydiméthylsiloxane avec une masse molaire moyenne en nombre supérieur à 100 000 en émulsion aqueuse, en solution aqueuse ou en suspension.

## Claims

1. The use of an aqueous solution or suspension containing glycidoxypropyl silanol and polydimethyl siloxanes having a number average molecular weight of more than 100,000 as mould release agents for plastics.

2. Mould release agents containing 0.5 to 3% by weight glycidoxypropyl silanol and 0.2 to 2% by weight of a silicone latex, the silicone latex containing 25 to 55% by weight of a polydimethyl siloxane having a number average molecular weight of more than 100,000 in aqueous emulsion, in aqueous solution or suspension.